# EUROPÄISCHE PATENTANMELDUNG

(11) **EP 4 614 024 A1**
(43) Veröffentlichungstag der Anmeldung: **10.09.2025**
(21) Anmeldenummer: 25160159.7
(22) Anmeldetag: 26.02.2025
(51) Int. Cl.: F16D 65/12

(54) **VERFAHREN UND VORRICHTUNG ZUM BESCHICHTEN VON BREMSSCHEIBEN**

(30) Priorität: 06.03.2024 DE 102024106430
(71) Anmelder: Sprimag Spritzmaschinenbau GmbH & Co. KG, 73230 Kirchheim unter Teck (DE)
(72) Erfinder: Anders, Mathias, 73230 Kirchheim unter Teck (DE); Beck, Klaus, 73266 Bissingen (DE); Ellwanger, Lars Philipp, 71126 Gäufelden (DE)
(74) Vertreter: Ruckh, Rainer Gerhard

(57) **Zusammenfassung**

Die Erfindung betrifft ein Verfahren zum Beschichten von Innenbelüftungskanälen (4) aufweisenden Bremsscheiben (1). Die Innenbelüftungskanäle (4) einer Bremsscheibe (1) werden mit flüssigem Lack (7) geflutet. Die Bremsscheiben (1) werden bei mit Lack (7) gefluteten Innenbelüftungskanälen (4) geschleudert.

## Beschreibung

Die Erfindung betrifft ein Verfahren und eine Vorrichtung zum Beschichten von Bremsscheiben mit einem Lack.

Bremsscheiben werden in unterschiedlichen Ausführungsformen in Kraftfahrzeugen als wesentliche Bestandteile von Bremssystemen eingesetzt.

Wesentliche Anforderungen bei der Fertigung derartiger Bremsscheiben sind neben hohen Genauigkeitsanforderungen hinsichtlich der Geometrien der Bremsscheiben auch hohe Anforderungen hinsichtlich der Werkstoffqualitäten.

Zudem fordern Normen, wie die Norm Euro 7, dass die Bremssysteme geringe Feinstaubemissionen verursachen, wobei diese Feinstaubemissionen durch Abrieb an den Bremsflächen verursacht sind.

Eine weitere wesentliche Anforderung besteht in einer langen Lebensdauer der Bremsscheiben, so dass diese im Idealfall während der durchschnittlichen Nutzungsdauer eines Kraftfahrzeugs nicht ausgetauscht werden müssen.

Ein wesentlicher Faktor hierbei besteht darin, die Bremsscheiben mit einem Korrosionsschutz zu versehen.

Bekanntermaßen wird hierzu mittels eines Sprühlackierverfahrens auf die Bremsscheiben eine Lackschicht aufgetragen, wobei der in flüssiger Form vorliegende Lack ein Korrosionsschutzmittel ist.

Mit einer derartigen Sprühlackierung können die Außenseiten einer Bremsscheibe problemlos beschichtet werden.

Ein Problem besteht jedoch darin, dass Bremsscheiben eine Anordnung von Innenbelüftungskanälen aufweisen, die zur Belüftung der Bremsen dienen. Die Innenbelüftungskanäle münden einerseits an der äußeren Mantelfläche der rotationssymmetrischen, im wesentlichen kreisscheibenförmigen Bremsscheibe aus. Weiterhin münden die Innenbelüftungskanäle im Innenbereich der Bremsscheibe aus. Die Innenbelüftungskanäle können im einfachsten Fall im Inneren der Bremsscheibe in radialer Richtung verlaufen. Jedoch sind auch gekrümmte, winklig verlaufende Bahnen der Innenbelüftungskanäle im Inneren einer Bremsscheibe möglich. Auch Anordnungen in Form von Pins und Stäben sind möglich.

Mit einer Sprühlackierung kann der das Korrosionsschutzmittel bildende Lack nur begrenzt in die Innenbelüftungskanäle eingeführt werden, was zur Folge hat, dass die die Innenbelüftungskanäle begrenzenden Wandsegmente der Bremsscheiben nicht ausreichend oder an einigen Stellen überhaupt nicht mit einer Lackschicht beschichtet sind.

Dies hat zur Folge, dass im Bereich der Innenbelüftungskanäle verstärkt eine Korrosion der Bremsscheiben auftritt, was zur Folge hat, dass deren Lebensdauer unerwünscht reduziert ist.

Der Erfindung liegt die Aufgabe zugrunde ein Verfahren bereitzustellen, mittels dessen Bremsscheiben reproduzierbar und vollständig mit Lack beschichtet werden können.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zum Beschichten von Innenbelüftungskanälen aufweisenden Bremsscheiben. Die Innenbelüftungskanäle einer Bremsscheibe werden mit flüssigem Lack geflutet. Die Bremsscheiben werden bei mit Lack gefluteten Innenbelüftungskanälen geschleudert.

Weiterhin ist eine Vorrichtung zur Durchführung des Verfahrens vorgesehen.

Gemäß dem erfindungsgemäßen Verfahren wird eine Beschichtung von Innenbelüftungskanälen einer Bremsscheibe durch Fluten mit flüssigem Lack bewerkstelligt, d.h. die Innenbelüftungskanäle werden mit flüssigem Lack durchspült.

Wesentlich hierbei ist, dass während oder nach dem Fluten der Innenbelüftungskanäle die Bremsscheibe geschleudert wird. Durch dieses Schleudern wird erreicht, dass der flüssige Lack auch in enge bzw. schwer zugängliche Bereiche der Innenbelüftungskanäle eindringt. Durch die erfindungsgemäße Kombination des Flutens mit Lack und des Schleuderns der Bremsscheiben wird somit erreicht, dass sich der flüssige Lack über die gesamten Längen der Innenbelüftungskanäle verteilt, so dass eine vollständige Beschichtung der Innenbelüftungskanäle mit Lack gewährleistet ist und überschüssiges Lackmaterial abgeschleudert wird.

Der Lack ist generell ein Korrosionsschutzmittel, so dass mit diesem ein effizienter Korrosionsschutz erzielt wird. Optional können spätere Prozessschritte für eine weitere Sprühlackierung der Innenbelüftungskanäle, zusätzlich zu dem erfindungsgemäßen Fluten und Schleudern, vorgesehen sein.

Für diesen Korrosionsschutz ist es erforderlich, dass die Lackschicht in den Innenbelüftungskanälen eine bestimmte und konstante Schichtdicke aufweist. In Radien oder im Bereich von Kanten wird es, insbesondere durch wirkende Adhäsionskräfte zu einer höheren Schichtdicke kommen. Dabei ist es wesentlich, dass sich die Lackschicht vollständig entlang der Innenbelüftungskanäle erstreckt und dabei die Belüftungsfunktion der Innenbelüftungskanäle nicht beeinträchtigt. Diese Anforderungen werden mit dem erfindungsgemäßen Verfahren erfüllt.

Gemäß einer ersten Variante wird mit dem erfindungsgemäßen Fluten die gesamte Bremsscheibe mit Lack beschichtet. Gemäß einer zweiten Variante wird mit dem erfindungsgemäßen Fluten selektiv nur der Bereich der Innenbelüftungskanäle beschichtet oder es wird neben dem Bereich der Innenbelüftungskanäle nur ein Teil der Außenflächen und Innenflächen der Bremsscheiben beschichtet, wobei die Eintauchtiefe der Bremsscheibe die Benetzungsgrenze definiert. Im letzteren Fall werden dann die nicht durch Fluten beschichteten Außenflächen mittels Sprühlackieren mit Lack beschichtet. Alternativ kann in den durch Sprühlackierung zugänglichen Stellen die Schichtdicke in der Innenbelüftung durch eine zusätzliche Lackierung erhöht werden.

Dementsprechend kann gemäß einer ersten Variante die Bremsscheibe zumindest partiell in ein mit Lack befülltes Tauchbecken so eingeführt werden, dass die Innenbelüftungskanäle mit Lack geflutet werden

Dabei kann die Bremsscheibe komplett in den Lack im Tauchbecken eingetaucht werden. Alternativ kann die Bremsscheibe so in das Tauchbecken eingeführt werden, dass nur eine Stirnseite und die Bereiche der Innenbelüftungskanäle der Bremsscheibe in den Lack eingetaucht sind.

Je nach Grad des Eintauchens in das Tauchbecken werden die Außenseiten der Bremsscheiben komplett oder teilweise durch Fluten beschichtet. Die freibleibenden Außenseiten der Bremsscheiben können mittels Sprühlackieren beschichtet werden.

Gemäß einer zweiten Alternative werden die Innenbelüftungskanäle mit einer Flutungseinheit selektiv geflutet.

Die Flutungseinheit speist selektiv flüssigen Lack über Austrittsöffnungen in die Innenbelüftungskanäle ein, entweder über die an der äußeren Mantelfläche der Bremsscheibe ausmündenden Öffnungen der Innenbelüftungskanäle oder vorzugsweise über innenliegende Öffnungen im Bereich der Radabschraubfläche der Bremsscheibe.

Vorteilhaft ist im letzteren Fall an der Außenseite der Flutungseinheit eine Düsenanordnung im Bereich der Austrittsöffnungen befestigt. Die Düsenanordnung weist Düsenöffnungen auf, die mit der Austrittsöffnungen der Flutungseinheit fluchten, wobei die Durchmesser der Düsenöffnungen kleiner sind als die Durchmesser der Austrittsöffnungen. Weiterhin ist am äußeren Rand der Bremsscheibe ein Aufsatz befestigt, der eine Anordnung von Durchtrittsöffnungen aufweist, die mit dem Innenbelüftungskanälen fluchten und an deren Öffnungen direkt anschließen. Die Durchmesser der Durchtrittsöffnungen des Aufsatzes sind kleiner als die Durchmesser der Innenbelüftungskanäle.

Mit der Düsenanordnung wird mit erhöhter Geschwindigkeit Lack in die Innenbelüftungskanäle eingeleitet. Der Aufsatz mit den gegenüber den Innenbelüftungskanälen verengten Durchtrittsöffnungen erzeugt einen Gegendruck für den in den Innenbelüftungskanälen geführten Lack und sorgt für eine homogene Beschichtung mit Lack in den Innenbelüftungskanälen.

Für den Fall, dass die Flutungseinheit Lack über außenliegende Öffnungen der Innenbelüftungskanäle der Bremsscheibe einspeist, ist die Düsenanordnung außen an der Flutungseinheit angeordnet und der Aufsatz mit den Durchtrittsöffnungen befindet sich an den innenliegenden Öffnungen der Innenbelüftungskanäle.

Bei beiden Varianten können freigebliebene Außenflächen mittels einer Sprühlackierung mit Lack beschichtet werden.

Dies ist insbesondere auch dann der Fall, wenn die Bremsscheiben nachträglich bearbeitet werden, wodurch an Außenflächen lokal die Lackschicht abgetragen werden kann.

Vorteilhaft ist bei beiden Varianten die Bremsscheibe mittels eines von einer Steuereinheit gesteuerten Handlingsystems positionierbar.

Je nach Variante der erfindungsgemäßen Beschichtungsverfahren, ist es zweckmäßig, dass mittels des Handlingsystems die Bremsscheibe in ein Tauchbecken einführbar ist, oder dass mittels des Handlingsystems die Bremsscheibe und eine Flutungseinheit relativ zueinander positionierbar sind.

In die Steuereinheit können Teilinformationen über unterschiedliche Bremsscheiben eingegeben und dort abgespeichert werden. Alternativ oder zusätzlich können unterschiedliche Bremsscheiben an Erfassungsstationen mit geeigneter Sensorik identifiziert werden.

Anhand der Teilinformationen können in der Steuereinheit unterschiedliche Ablaufsteuerungen aktiviert werden.

Das Handlingsystem greift, vorzugsweise mittels einer Handlingachse, eine zu beschichtende Bremsscheibe auf und führt sie dem Tauchbecken zu oder positioniert sie relativ zur Flutungseinheit. Zweckmäßig liegt die Handlingachse, die von einem Greifarm oder dergleichen gebildet ist, in der Symmetrieachse der daran fixierten Bremsscheibe.

Bei einer Beschichtung in einem Tauchbecken wird mit dem Handlingsystem eine Bremsscheibe von oben in das Tauchbecken eingeführt, wobei die Bremsscheibe in einer horizontalen oder in einer geneigten Ebene verlaufen kann.

Während des Eintauchens in das Tauchbecken erfolgt das Schleudern der Bremsscheibe mittels des Handlingsystems. Dabei wird die Bremsscheibe vorteilhaft um ihre Symmetrieachse gedreht. Drehrichtung, Drehzahl sowie die Dauer des Schleuderns wird über die Ablaufsteuerung in der Steuereinheit vorgegeben.

Entsprechende Schleudervorgänge der Bremsscheiben werden bei der Beschichtung der Innenbelüftungskanäle mittels der Flutungseinheit durchgeführt.

Durch die Schleudervorgänge wird erreicht, dass sich der Lack über die gesamten Innenflächen der Innenbelüftungskanäle verteilt, so dass eine vollständige Innenbeschichtung der Innenbelüftungskanäle erreicht wird.

Weiterhin ist es möglich, dass in einem zusätzlichen Verfahrensschnitt die Bremsscheibe nach dem Fluten mit Lack geschleudert wird.

Dadurch kann überschüssiger Lack an der Bremsscheibe abgeschleudert werden.

Nachdem die Bremsscheibe vollständig beschichtet wird, wird diese getrocknet, vorzugsweise in einer hierfür vorgesehenen Trocknungskammer. Danach steht die Bremsscheibe für weitere Arbeitsschritte zur Verfügung.

Im besten Fall wird direkt nach dem Fluten und Schleudern ggf. eine anschließend notwendige Sprühlackierung für die restlichen Flächen der Bremsscheibe durchgeführt. Dies erfolgt gemäß den Spezifikationen des Lacks.

Gemäß einer vorteilhaften Weiterbildung der Erfindung wird die Bremsscheibe während des Schleuderns getrocknet.

Wenn nach dem Fluten mit Lack die Bremsscheibe geschleudert wird, können simultan die Innenbelüftungskanäle der Bremsscheibe durch Einblasen vorzugsweise warmer Luft getrocknet werden.

Vorteilhaft ist hierzu eine geeignete Gebläseeinheit vorgesehen.

Generell kann die mit dem erfindungsgemäßen Verfahren beschichtete Bremsscheibe ein Rohteil oder ein Fertigteil sein, wobei abhängig hiervon weitere Prozessschritte variieren können.

Die Erfindung wird im Folgenden anhand der Zeichnungen erläutert. Es zeigen:
- Figur 1:: Schematische Darstellung einer Bremsscheibe
a) in einer Draufsicht von oben.
b) in einer Schnittdarstellung.
- Figur 2:: Handlingsystem mit einer an diesem gelagerten Bremsscheibe und einem zugeordneten mit Lack gefüllten Tauchbecken
a) bei außerhalb des Tauchbeckens angeordneter Bremsscheibe.
b) bei in den Lack ein Tauchbecken getauchter Bremsscheibe.
- Figur 3:: Bremsscheibe mit einer zugeordneten Flutungseinheit.
- Figur 4:: Variante der Anordnung gemäß Figur 3.

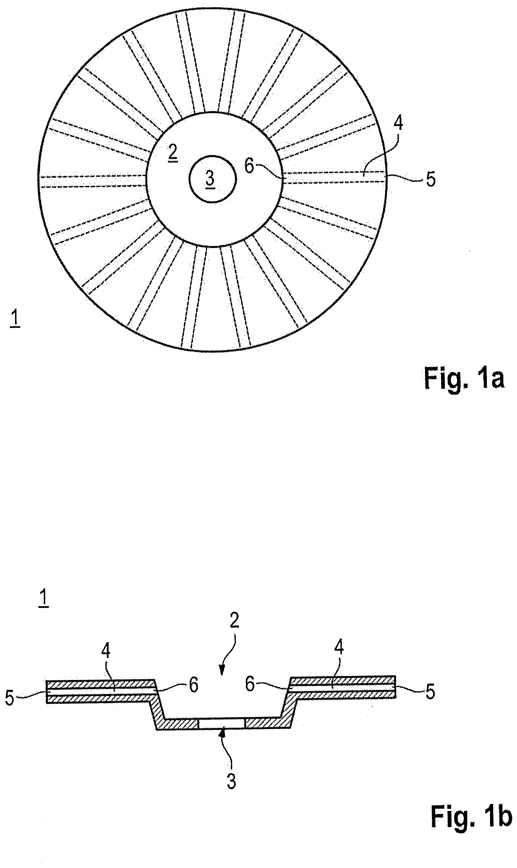

Die Figuren 1a und 1b zeigen stark schematisiert und nicht maßstäblich ein Ausführungsbeispiel einer Bremsscheibe 1 eines Kraftfahrzeugs.

Die Bremsscheibe 1 weist eine rotationssymmetrische im Wesentlichen kreisscheibenförmige Form auf. In der Mitte der Bremsscheibe 1 befindet sich eine ebenfalls rotationssymmetrische Vertiefung 2 mit einer zentralen Aussparung 3 welche eine Radanschraubfläche ausbilden.

Im Innern der Bremsscheibe 1 verlaufen Innenbelüftungskanäle 4 zur Belüftung einer Bremse des Kraftfahrzeugs. Die Innenbelüftungskanäle 4 sind im vorliegenden Fall identisch ausgebildet und bilden eine zum Mittelpunkt der Bremsscheibe 1 konzentrische Anordnung. Dabei verlaufen die Innenbelüftungskanäle 4 in radialer Richtung, was jedoch nicht zwingend ist. Die Innenbelüftungskanäle 4 sind äquidistant in Umfangsrichtung der Bremsscheibe 1 verteilt. Auch dies ist nicht zwingend.

Jeder Innenbelüftungskanal 4 mündet mit einer ersten Öffnung 5 an der äußeren Mantelfläche der Bremsscheibe 1 und mit einer zweiten Öffnung 6 an der Radanschraubfläche aus.

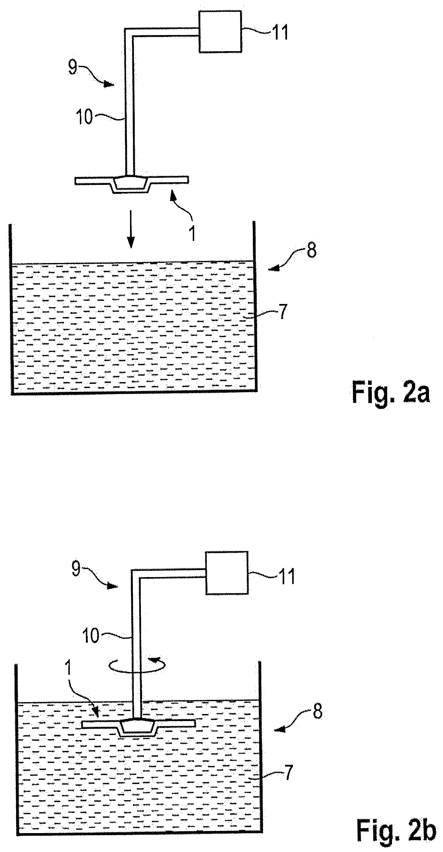

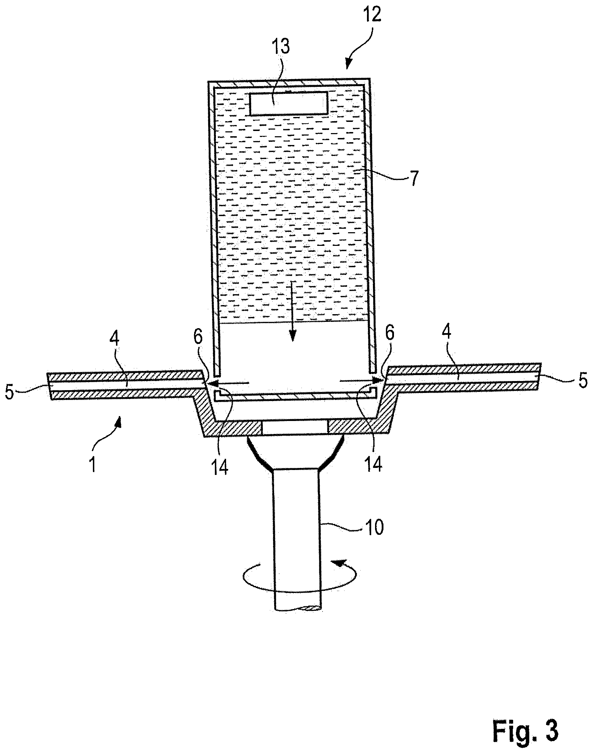

Zur Erzielung einer hohen Lebensdauer werden die Bremsscheiben 1 mit einem ein Korrosionsschutzmittel bildenden Lack 7 beschichtet. Mit dem erfindungsgemäßen Verfahren werden nicht nur die Außenseiten der Bremsscheiben 1 sondern auch deren Innenbelüftungskanäle 4, d. h. die die Innenbelüftungskanäle 4 begrenzenden Wandsegmente, vollständig mit Lack 7 beschichtet. Ausführungsbeispiele des erfindungsgemäßen Verfahrens sind in den Figuren 2a, 2b und 3 dargestellt.

Bei dem in den Figuren 2a, 2b gezeigten Verfahren ist in einem Tauchbecken 8 flüssiger Lack 7 gelagert, der falls erforderlich, auf eine optimale Arbeitstemperatur hochgeheizt wird.

Wie aus den Figuren 2a, 2b weiter ersichtlich ist zur Positionierung einer Bremsscheibe 1 ein Handlingsystem 9 vorgesehen. Das Handlingsystem 9 umfasst eine Handlingachse in Form eines Greifers 10, wobei diese von einer Steuereinheit 11 gesteuert wird. Der Greifer 10 greift die Bremsscheibe 1 im Bereich der Radanschraubfläche, so dass die Längsachse des Greifers 10 mit der Symmetrieachse der Bremsscheibe 1 zusammenfällt.

Die Steuereinheit 11, die von einer Rechnereinheit wie z.B. einem Mikroprozessorsystem oder dergleichen gebildet ist, führt eine Teileidentifikation zur Erkennung unterschiedlicher Bremsscheiben 1 durch und aktiviert davon abhängig ein Ablaufprogramm zur Steuerung des Beschichtungsvorgangs einer Bremsscheibe1.

Wie Figur 2b zeigt, wird mit dem Handlingsystem 9 die Bremsscheibe 1 in den Lack 7 im Tauchbecken 8 eingetaucht, wodurch insbesondere auch die Innenbelüftungskanäle 4 mit Lack 7 geflutet werden. Im vorliegenden Fall ist die Bremsscheibe 1 in einer horizontalen Ebene orientiert, wenn sie in den Lack 7 eingetaucht ist. Alternativ kann die Bremsscheibe 1 in einem Neigungswinkel zur Horizontalen in den Lack 7 eingetaucht sein, wodurch die Durchflutung der Innenbelüftungskanäle 4 noch weiter verbessert wird.

Alternativ kann die Bremsscheibe 1 nur mit ihrer unten liegenden Stirnseite im Lack 7 eingetaucht werden. In diesem Fall wird die freibleibende Oberseite der Bremsscheiben 1 nachträglich durch Sprühlackieren mit Lack 7 beschichtet.

Bei in den Lack 7 eingetauchter Bremsscheibe 1 wird diese mittels des Handlingsystems 9 geschleudert, wodurch erreicht wird, dass der flüssige Lack 7 in alle Bereiche der Innenbelüftungskanäle 4 eindringt, so dass die die Innenbelüftungskanäle 4 begrenzenden Wandsegmente vollständig mit Lack 7 benetzt werden.

Das Schleudern erfolgt derart, dass die Bremsscheibe 1 in eine Drehbewegung um ihre Symmetrieachse versetzt wird, wobei Drehrichtung und Drehzahl durch das Handlingsystem 9 vorgegeben wird. Auch die Dauer des Schleuderns wird über das Handlingsystem 9 vorgegeben. Auch andere Drehbewegungen sind prinzipiell möglich.

Nach dem Schleudern wird die Bremsscheibe 1 mit dem Handlingsystem 9 aus dem Tauchbecken 8 herausgeführt. Auch bei aus dem Lack 7 herausgeführter Bremsscheibe 1 kann der Schleudervorgang durch Drehen der Bremsscheibe 1 fortgesetzt werden um überschüssigen Lack 7 abzuschleudern.

Während dieses Schleudervorgangs kann Luft, insbesondere trockene warme Luft, mit einer nicht dargestellten Gebläseeinheit in die Innenbelüftungskanäle 4 eingeblasen werden, um den Lack 7 in den Innenbelüftungskanälen 4 zu trocknen oder zumindest vorzutrocknen.

Nach diesen Arbeitsprozessen wird die Bremsscheibe 1 getrocknet, vorzugsweise in einer Trockungskammer, und steht dann für weitere Bearbeitungsschritte zur Verfügung.

Figur 3 zeigt ein weiteres Ausführungsbeispiel des erfindungsgemäßen Verfahrens. Auch in diesem Fall wird die Bremsscheibe 1 mittels des Handlingsystems 9 positioniert, wobei in Figur 3 nur der die Bremsscheiben 1 fixierende Greifer 10 des Handlingsystems 9 dargestellt ist.

Mit dem Handlingsystem 9 wird die Bremsscheibe 1 relativ zu einer Flutungseinheit 12 positioniert, in welcher flüssiger Lack 7 gelagert ist. Die Flutungseinheit 12 weist eine Fördereinheit 13 auf, mit der flüssiger Lack 7 über Austrittsöffnungen 14 der Flutungseinheit 12 ausgeführt und direkt über die Öffnungen 6 in die Innenbelüftungskanäle 4 der Bremsscheiben 1 eingeleitet wird, so dass die Innenbelüftungskanäle 4 vollständig mit Lack 7 geflutet werden.

Alternativ kann auch eine Flutungseinheit 12 so ausgebildet sein, dass mit dieser flüssiger Lack 7 über die Öffnungen 5 in die Innenbelüftungskanäle 4 der Bremsscheiben 1 eingeführt wird.

Da bei dieser Ausführungsform mit der Flutungseinheit 12 selektiv die Innenbelüftungskanäle 4 der Bremsscheiben 1 mit Lack 7 beschichtet werden, erfolgt das Beschichten der Außenseiten der Bremsscheiben 1 mittels einer Sprühlackierung. Ansonsten entspricht das Verfahren zur Beschichtung der Bremsscheibe 1 deren Verfahren gemäß den Figuren 2a, 2b.

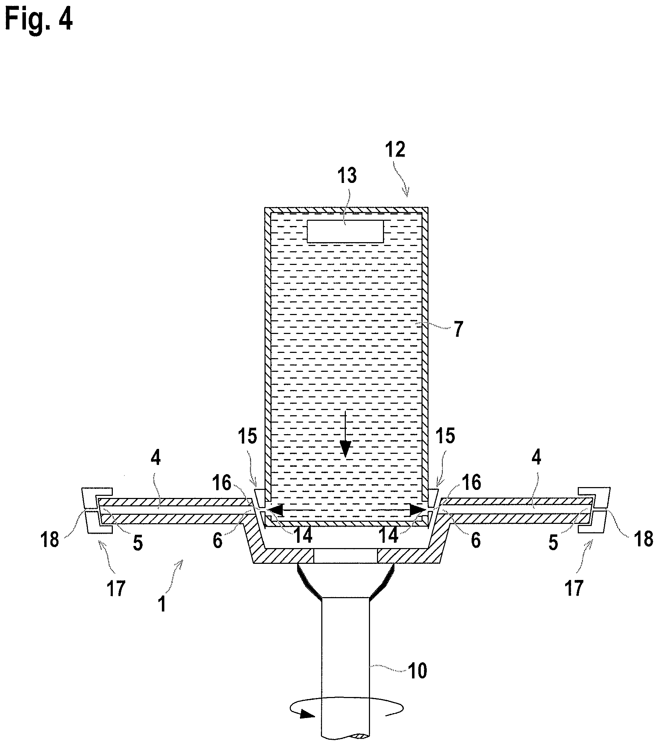

Figur 4 zeigt eine Variante der Ausführungsform gemäß Figur 3.

Die Ausführungsform der Figur 4 unterscheidet sich von der Ausführungsform der Figur 3 dadurch, dass an der Außenseite der Flutungseinheit 12 eine Düsenanordnung 15 im Bereich der Austrittsöffnungen 14 befestigt ist. Die Düsenanordnung 15 weist Düsenöffnungen 16 auf, die mit der Austrittsöffnungen 14 der Flutungseinheit 12 fluchten, wobei die Durchmesser der Düsenöffnungen 16 kleiner sind als die Durchmesser der Austrittsöffnungen 14. Weiterhin ist am äußeren Rand der Bremsscheibe ein Aufsatz 17 befestigt, der eine Anordnung von Durchtrittsöffnungen 18 aufweist, die mit dem Innenbelüftungskanälen 4 fluchten und an deren Öffnungen 5 direkt anschließen. Die Durchmesser der Durchtrittsöffnungen 18 des Aufsatzes 17 sind kleiner als die Durchmesser der Innenbelüftungskanäle 4.

Mit der Düsenanordnung 15 wird mit erhöhter Geschwindigkeit Lack in die Innenbelüftungskanäle 4 eingeleitet. Der Aufsatz 17 mit den gegenüber den Innenbelüftungskanälen 4 verengten Durchtrittsöffnungen 18 erzeugt einen Gegendruck für den in den Innenbelüftungskanälen 4 geführten Lack und sorgt für eine homogene Beschichtung mit Lack in den Innenbelüftungskanälen 4.

### Bezugszeichenliste

- (1): Bremsscheibe
- (2): Vertiefung
- (3): Aussparung
- (4): Innenbelüftungskanal
- (5): erste Öffnung
- (6): zweite Öffnung
- (7): Lack
- (8): Tauchbecken
- (9): Handlingsystem
- (10): Greifer
- (11): Steuereinheit
- (12): Flutungseinheit
- (13): Fördereinheit
- (14): Austrittsöffnung
- (15): Düsenanordnung
- (16): Düsenöffnung
- (17): Aufsatz
- (18): Durchtrittsöffnung

## Patentansprüche

1. Verfahren zum Beschichten von Innenbelüftungskanälen (4) aufweisenden Bremsscheiben (1), **dadurch gekennzeichnet, dass** die Innenbelüftungskanäle (4) einer Bremsscheibe (1) mit flüssigem Lack (7) geflutet werden, und dass die Bremsscheibe (1) bei mit Lack (7) gefluteten Innenbelüftungskanälen (4) geschleudert wird.

2. Verfahren nach Anspruch 1, **dadurch gekennzeichnet, dass** die Bremsscheibe (1) zumindest partiell in ein mit Lack (7) befülltes Tauchbecken (8) so eingeführt wird, dass die Innenbelüftungskanäle (4) mit Lack (7) geflutet werden, wobei die Bremsscheibe (1) komplett in den Lack (7) im Tauchbecken (8) eingetaucht wird, dass die Bremsscheibe (1) so in das Tauchbecken (8) eingeführt wird, dass nur eine Stirnseite und die Bereiche der Innenbelüftungskanäle (4) der Bremsscheibe (1) in den Lack (7) eingetaucht sind.

3. Verfahren nach Anspruch 1, **dadurch gekennzeichnet, dass** die Innenbelüftungskanäle (4) mit einer Flutungseinheit (12) selektiv geflutet werden.

4. Verfahren nach einem der Ansprüche 1 bis 3, **dadurch gekennzeichnet, dass** die Bremsscheibe (1) durch eine Drehbewegung geschleudert wird.

5. Verfahren nach einem der Ansprüche 1 bis 4, **dadurch gekennzeichnet, dass** die Bremsscheibe (1) während des Flutens mit Lack (7) oder nach dem Fluten mit Lack (7) geschleudert wird.

6. Verfahren nach einem der Ansprüche 1 bis 7, **dadurch gekennzeichnet, dass** die Bremsscheibe (1) nach dem Fluten mit Lack (7) während des Schleuderns getrocknet wird.

7. Verfahren nach einem der Ansprüche 1 bis 6, **dadurch gekennzeichnet, dass** nicht durch Fluten beschichtete Flächen der Bremsscheibe (1) mittels Sprühlackieren beschichtet werden.

8. Verfahren nach einem der Ansprüche 1 bis 7, **dadurch gekennzeichnet, dass** der Lack (7) ein Korrosionsschutzmittel ist.

9. Vorrichtung zum Beschichten von Innenbelüftungskanäle (4) aufweisenden Bremsscheiben (1), **dadurch gekennzeichnet, dass** diese Mittel zur Flutung von Innenbelüftungskanälen (4) einer Bremsscheibe (1) und Mittel zum Schleudern der mit Lack (7) gefluteten Innenbelüftungskanäle (4) aufweist.

10. Vorrichtung nach Anspruch 9, **dadurch gekennzeichnet, dass** die Bremsscheibe (1) mittels eines von einer Steuereinheit (11) gesteuerten Handlingsystems (9) positionierbar ist.

11. Vorrichtung nach Anspruch 10, **dadurch gekennzeichnet, dass** mittels des Handlingsystems (9) die Bremsscheibe (1) in ein Tauchbecken (8) einführbar ist.

12. Vorrichtung nach Anspruch 10, **dadurch gekennzeichnet, dass** mittels des Handlingsystems (9) die Bremsscheibe (1) und eine Flutungseinheit (12) relativ zueinander positionierbar sind, so dass über Austrittsöffnungen (14) der Flutungseinheit (12) flüssiger Lack (7) in Öffnungen (5, 6) der Innenbelüftungskanäle (4) der Bremsscheibe (1) einführbar ist.

13. Vorrichtung nach Anspruch 11, **dadurch gekennzeichnet, dass** an der Flutungseinheit (12) eine Düsenanordnung (15) befestigt ist, wobei die Düsenanordnung (15) Düsenöffnungen (16) aufweist, die mit den Austrittsöffnungen (14) der Flutungseinheit (12) fluchten, wobei die Durchmesser der Düsenöffnungen (16) kleiner sind als die Durchmesser der Austrittsöffnungen (14), und wobei an dem äußeren Rand der Bremsscheibe (1) ein Aufsatz (17) befestigt ist, der eine Anordnung von Durchtrittsöffnungen (18) aufweist, die mit den Innenbelüftungskanälen (4) der Bremsscheibe (1) fluchten und an deren Öffnungen direkt anschließen, wobei die Durchmesser der Durchtrittsöffnungen (18) kleiner sind als die Durchmesser der Innenbelüftungskanäle (4).

14. Vorrichtung nach einem der Ansprüche 9 bis 13, **dadurch gekennzeichnet, dass** mittels des Handlingsystems (9) Schleuderbewegungen der Bremsscheibe (1) durchführbar sind.

15. Vorrichtung nach einem der Ansprüche 9 bis 14, **dadurch gekennzeichnet, dass** diese eine Gebläseeinheit aufweist mittels derer Luft in die mit Lack (7) gefluteten Innenbelüftungskanäle (4) der Bremsscheibe (1) einblasbar ist.
